# EUROPÄISCHE PATENTANMELDUNG

(11) **EP 1 673 995 A1**
(43) Veröffentlichungstag der Anmeldung: **28.06.2006**
(21) Anmeldenummer: 04030612.8
(22) Anmeldetag: 23.12.2004
(51) Int. Cl.: A45B 3/00

(54) **Vorrichtung zum Abstellen, Ablegen und/oder Anhängen von Gegenständen an einem Mast, einem Pfahl, einer Stütze, einem Geländer oder dergleichen**

(71) Anmelder: Männer, Wolfgang, 64625 Bensheim (DE)
(72) Erfinder: Männer, Wolfgang, 64625 Bensheim (DE)
(74) Vertreter: Naumann, Ulrich

(57) **Zusammenfassung**

Vorrichtung zum Abstellen, Ablegen und/oder Anhängen von Gegenständen an einem Mast, einem Pfahl, einer Stütze oder dergleichen, insbesondere an dem Mast eines Standschirms, mit einer Aufnahme für die Gegenstände und einer die Aufnahme mit dem Mast verbindenden Halteeinrichtung.

## Beschreibung

Die Erfindung betrifft eine Vorrichtung zum Abstellen, Ablegen und/oder Anhängen von Gegenständen an einem Mast, einem Pfahl oder einer Stütze, einem Geländer, insbesondere an dem Mast eines Standschirms.

Die erfindungsgemäße Vorrichtung lässt sich grundsätzlich in Verbindung mit jedweden mastartigen Bauteilen verwenden, wobei es sich dabei um Bauteile mit unterschiedlichen Querschnittsformen - rund. oval, eckig bzw. quadratisch, etc. - handeln kann.

Wer sich nicht andauernd einer direkten Sonneneinstrahlung aussetzen möchte, weiß die Vorteile eines Sonnenschirms zu schätzen. So finden Sonnenschirme überall dort ihren Einsatz, wo man sich vor der unmittelbaren Sonneneinstrahlung schützen sollte, so beispielsweise auf Sonnenterrassen, in Schwimmbädern oder am Strand. Nicht selten sind die Masten der Sonnenschirme am, bzw. im Boden befestigt oder gar dort versenkt. Jedenfalls ist in der Regel gewährleistet, dass der Mast einen festen vertikalen Stand hat, um den Schirm in einer sicheren Position zu halten.

Insbesondere bei den Sonnenanbetern im Schwimmbad, an Baggerseen oder am Strand kommt dem Sonnenschirm eine weitere Funktion dahingehend zu, dass man Funktionsteile des Schirms zum Auf- bzw. Anhängen von Kleidungsstücken, Handtüchern, nassen Badehosen, etc. missbraucht. So dient ein Schirm nicht selten zum Aufhängen bzw. Halten von Utensilien jedweder Art. Abgesehen von einem daraus resultierenden unordentlichen Eindruck besteht stets die Gefahr, dass beispielsweise zum Trocknen aufgehängte Badehosen in den Sand fallen und daher verschmutzt werden. Dies gilt es zu vermeiden.

Hinzu kommt ein weiteres Problem dahingehend, dass man auf Sonnenterrassen, im Schwimmbad, an Baggerseen oder am Strand gerne Getränke und Speisen zu sich nimmt. Dabei werden Gläser und Teller in Ermangelung eines Tischs regelmäßig auf den Boden gestellt, was am Strand stets eine Verschmutzung der Getränke und Speisen mit sich bringt. An den durch Kondenswasser feuchten Trinkgefässen haftet Schmutz und Sand an, so dass der gepflegte Genuss eines Cocktails schwierig ist. Die Bereitstellung eines separaten Tisches ist regelmäßig in Ermangelung eines solchen Tisches nicht möglich und schränkt obendrein den Schatten spendenden Platz unter dem Schirm erheblich ein, so dass man auf einen Tisch zwangsläufig verzichtet.

Im Lichte der voranstehenden Ausführungen liegt der Erfindung die Aufgabe zugrunde, mit einfachen Mitteln eine Platz sparende Möglichkeit zum Abstellen, Ablegen und/oder Anhängen von Gegenständen im Schatten spendenden Bereich eines Schirms, eines Geländers, etc. bereitzustellen, wobei sich diese Möglichkeit nicht nur auf die Anbringung am Mast eines Schirms oder an einem Geländer sondern grundsätzlich auf die Anbringung an Masten, Pfählen und Stützen bezieht.

Die voranstehende Aufgabe wird durch die Merkmale des Patentanspruchs 1 gelöst. Danach liegt der Erfindung die Idee zugrunde, den Mast eines Schirms, einen Pfahl oder eine Stütze zum Abstellen, Ablegen und/oder Anhängen von Gegenständen zu nutzen, ohne den den Mast umgebenden Raum wesentlich einzuschränken. Im Konkreten ist in erfindungsgemäßer Weise eine Vorrichtung zum Abstellen, Ablegen und/oder Anhängen von Gegenständen an einem Mast, einem Pfahl oder einer Stütze, insbesondere an dem Mast eines Sonnenschirms, vorgeschlagen, die eine Aufnahme für die Gegenstände aufweist. Diese Aufnahme ist mit dem Mast verbunden, und zwar über eine besondere Halteeinrichtung. So lassen sich in erfindungsgemäßer Weise Gegenstände jedweder Art am Mast eines Schirms abstellen, ablegen oder anhängen, so dass der Mast neben seiner eigentlichen Funktion eine weitere Funktion übernimmt.

Folglich ist mit einfachen Mitteln eine Platz sparende Abstell-, Ableg- und Anhängmöglichkeit von Gegenständen im Schatten spendenden Bereich eines Schirms bereitgestellt, nämlich dadurch, dass der Mast zur Aufnahme bzw. zum Halten der Vorrichtung dient.

In vorteilhafter Weise ist die Halteeinrichtung ein- oder mehrteilig ausgebildet. So kann zum Beispiel eine einteilig ausgebildete Halteeinrichtung vor dem Aufstellen eines Schirms auf den Mast geschoben werden. Eine mehrteilig ausgebildete Halteeinrichtung eignet sich insbesondere dann, wenn der Schirm schon installiert ist und die Halteeinrichtung durch Verbinden der einzelnen Teile am Mast befestigbar ist. Dabei können die Teile zum Beispiel miteinander verschraubbar oder in einer anderen Weise miteinander verbindbar sein.

Hinsichtlich der Befestigung der Halteeinrichtung am Mast kann diese über Form-oder Kraftschluss erfolgen. So kann zum Beispiel die Halteeinrichtung in vorhandene Bohrungen in den Mast gesteckt oder mit einer Nut im Mast in Druckverbindung bringbar sein. Die Halteeinrichtung kann aber auch am Mast angeschraubt, angschlagen, mit diesem verklebt oder in einer anderen Weise mit diesem verbunden sein.

In ganz besonders raffinierter Weise kann an der Halteeinrichtung eine Spannvorrichtung vorgesehen sein. Diese kann aus einer Öse und einem Haken bestehen, wobei die Öse über den Haken greift. Durch Zurückziehen der Öse, beispielsweise durch Umlegen eines mit der Öse verbundenen Spannhebels, kann so eine Klemmwirkung durch Verringern des inneren Durchmessers der Halteeinrichtung am Mast erzielt werden. Im Hinblick auf die unterschiedlichen Durchmesser von Masten kann in der Spannvorrichtung eine Rasterung vorgesehen sein, die ein Umlegen des Hebels in verschiedenen Positionen erlaubt, womit das Spannen der Halteeinrichtung in unterschiedlichen Abstufungen möglich ist. Auch ist es denkbar, der Spannvorrichtung und/oder der Halteeinrichtung ein oder mehrere Adapter zur Anpassung an unterschiedliche Mastdurchmesser zuzuordnen.

Die Klemmwirkung der Halteeinrichtung ist auch mittels Schraub- und/oder Steckverbindungen erzielbar. Dabei ist denkbar, dass über ein Teil mit Gewindegang, wie beispielsweise über eine Schraube, zwei in einem Abstand zueinander liegende, auf der Halteeinrichtung befestigte Anschläge durch Drehen der Schraube aufeinander zu bewegt werden, wodurch der innere Durchmesser der Halteeinrichtung verringert wird. Dabei kann beispielsweise der dem Schraubenkopf gegenüberliegende Anschlag ein Innengewinde aufweisen, wodurch dieser Anschlag relativ zu dem anderen Anschlag, an dem die Schraube durch ihren Schraubenkopf arretiert ist, bewegbar ist. Eine solche Bewegung kann aber auch alternativ durch Kontern mit einer Mutter erzielbar sein. Zudem ist es denkbar, dass die Halteeinrichtung ähnlich einer Schlauchschelle am Mast befestigbar ist.

In besonders vorteilhafter Weise kann die Halteeinrichtung als Manschette ausgebildet sein, die entweder einteilig geschlossen oder öffenbar ausgebildet ist, oder aus mehreren miteinander verbindbaren Teilen besteht. Dabei kann die Manschette an den Umfang des Masts angepasst sein, dass durch Klemmwirkung ein Verrutschen am Mast verhindert ist. Die Manschette kann aber auch mittels Schraubverbindung, wie zum Beispiel mittels Madenschrauben, am oder im Mast befestigbar sein. Eine Kombination der Klemmwirkung mit der Schraubverbindung würde dabei einen besonders festen Halt zwischen der Halteeinrichtung und dem Mast bewirken.

Ähnlich der oben genannten Manschette kann die Halteeinrichtung auch als Ring ausgebildet sein. Dieser kann als geschlossener oder offener Ring ausgebildet sein, wobei sich insbesondere ein offener Ring zur schnellen Installation der Vorrichtung am Mast eignet. Ein offener Ring kann über seine Öffnung auf den Mast eines bereits installierten Schirms geschoben werden. Ein geschlossener Ring eignet sich insbesondere dann, wenn die Vorrichtung vor dem Aufbau des Schirms am Mast installiert werden kann.

In vorteilhafter Weise ist die Halteeinrichtung um den Mast umlaufend ausgebildet, wodurch eine Fixierung der Halteeinrichtung von allen Seiten zugleich am Mast erfolgt.

Hinsichtlich einer einfachen Höhenverstellung kann die Halteeinrichtung eine abgerundete Innenfläche aufweisen, die problemlos über geringe Unebenheiten der Oberfläche des Masts gleitet.

Die Halteeinrichtung kann aber auch als flächiges Element mit einer zumindest bereichsweise an den Umfang des Masts angepassten Fläche ausgebildet sein. Das flächige Element kann unter Verwendung von Befestigungsmitteln an den Mast anschlagbar, anschraubbar oder in einer anderen Weise, wie zum Beispiel durch Verkleben oder Verschweißen, mit dem Mast verbindbar sein. Es ist aber auch denkbar, dass die Halteeinrichtung lediglich als ein schmales, am Mast anliegendes Teil ausgebildet ist, welches zum Beispiel über eine oder mehrere Schraubverbindungen am Mast befestigbar ist.

In besonders vorteilhafter Weise kann durch die Gewichtskraft der Aufnahme ein Dreh- oder Kippmoment auf die mit der Aufnahme verbundene Halteeineinrichtung bewirkt werden, so dass ein Verrutschen der Vorrichtung gehemmt ist. Dies ist besonders dann vorteilhaft, wenn die Vorrichtung schnell und ohne großen Aufwand am Mast anbringbar sein soll.

Für eine optimale Einstellbarkeit ist die Vorrichtung ganz allgemein am Mast höhenverstellbar. Die Höhenverstellung kann stufenlos oder in Abstufungen erfolgen. Eine stufenlose Verstellung ist mit einer Halteeinrichtung gewährleistet, dessen Halt beispielsweise durch Klemmwirkung oder Selbsthemmung erreicht wird. Eine abgestufte Höhenverstellung erfolgt zum Beispiel dann, wenn im Mast in definierten Abständen Bohrungen vorgesehen sind, in die die Halteeinrichtung eingesteckt wird.

Es ist besonders vorteilhaft, wenn die Halteeinrichtung in Bezug auf ihren inneren Durchmesser veränderbar ist, so dass sie an Masten mit unterschiedlichen Radien und Querschnittsformen anpassbar ist. Die Anpassbarkeit kann zum Beispiel durch die oben beschriebenen Ausgestaltungen der Halteeinrichtung mit der Spannvorrichtung oder der Schraubverbindung erzielt werden. Die Halteeinrichtung kann aber auch aus einem inneren und einem äußeren Bereich bestehen, wobei der innere Bereich ein zumindest geringfügig komprimierbares und anformbares Material umfasst. Auf diese Weise ist es möglich, eine Halteeinrichtung zu schaffen, die einen geringeren Durchmesser als der Mast aufweist. Durch Komprimieren des Materials des inneren Bereichs der Halteeinrichtung erfolgt eine Anpassung an den Mast. Durch die Spannung, die durch das nicht komprimierbare Außenmaterial entsteht, lässt sich die Klemmwirkung erzielen.

Die mit der Halteeinrichtung verbundene Aufnahme kann ein- oder mehrteilig ausgebildet sein. Dabei bietet sich zum Beispiel eine mehrteilige Aufnahme in Verbindung mit einer mehrteiligen Halteeinrichtung an, um die Vorrichtung an bereits installierten und aufgespannten Standschirmen anzubringen. So können zum Beispiel die Teile der Aufnahme über eine Spannvorrichtung oder eine Schraubvorrichtung um den Mast herum miteinander verbunden werden.

Im Hinblick auf ein sicheres Abstellen und Ablegen von Gegenständen kann die Aufnahme mindestens eine im Wesentlichen horizontale, vom Mast abragende Fläche umfassen. So kann die Aufnahme zum Beispiel ein Tablett oder ein Tisch sein, wobei diese an einer oder mehreren Seiten von der Halteeinrichtung in etwa horizontal abragend abschnittweise und/oder rundumlaufend um die Halteeinrichtung ausgebildet sind. So kann die vom Mast abragende Fläche zum Beispiel in Form eines runden oder eckigen Tischs ausgebildet sein, wodurch ein von allen Seiten zugänglicher Tisch, wie zum Beispiel ein Standtisch, am Mast ausgebildet ist.

In besonders raffinierter Weise können die vom Mast abragenden Flächen stufenartig zueinander ausgebildet sein. Daraus resultiert eine Aufnahme, die gleichzeitig Ablage-, Abstell- und Anhängemöglichkeiten in verschiedenen Höhen bietet.

Für einen besonders sicheren Stand von Trinkgefässen kann die als Tisch oder als Tablett ausgebildete Aufnahme Ausnehmungen aufweisen, die zum Beispiel als Vertiefungen und/oder Durchgänge ausgebildet sind. Ähnlich einem bekannten Trinkgefässhalter sind die Ausnehmungen an unterschiedliche Durchmesser verschiedener Trinkgefässe durch das Ausklappen oder Auflegen zusätzlicher, den Durchmesser der Ausnehmung verringernden Elementen, adaptierbar. Dabei sind die für Trinkgefässe üblichen Dimensionierungen vorteilhaft.

In einer besonders raffinierten Ausführung kann die als Tisch ausgebildete Aufnahme eine Aussparung aufweisen, über die der Tisch auf einen installierten Schirm schiebbar ist. Dabei ist die Dimensionierung der Aussparung so gewählt, dass sie an Masten mit unterschiedlichen Durchmessern anpassbar ist. So kann die Aussparung zum Beispiel mittels deren Durchmesser verringernden Adaptern an Masten mit unterschiedlichen Durchmessern und Querschnittsformen anpassbar sein. Zum Auffüllen der Aussparung ist ein in der Länge, der Breite und an unterschiedliche Durchmesser der Masten und des Tischs adaptierbares Einlegeelement vorgesehen, das in etwa der Form der Aussparung entspricht und über Kraftschluss mit dem Tisch verbunden ist. Eine Nut an den mit dem Einlegeelement verbindbaren Kanten kann dabei als Führung für das Einlegeelement dienen, das eine der Nut entsprechende Feder aufweist. Das Einlegeelement und der Tisch können aber auch über Verbindungselemente miteinander verbunden sein, die vorzugsweise an der Unterseite des Tischs und des Einlegelements anliegen. Die Verbindungselemente können dabei ähnlich wie die an der Halteeinrichtung vorgesehene Spannvorrichtung ausgestaltet sein. So können diese zum Beispiel aus einer Öse und einem Haken bestehen, wobei die Öse über den Haken greift. Durch Zurückziehen der Öse, beispielsweise durch Umlegen eines mit der Öse verbundenen Hebels, kann das Einlegeelement mit dem Tisch verbindbar sein. Durch das Einlegen und Verbinden des Einlegelements in die Aussparung des Tischs kann so eine Klemmwirkung der Vorrichtung am Mast realisiert sein.

Selbstverständlich ist es denkbar, dass die Aufnahme als Stange ausgebildet ist, die sich als Kleiderstange oder Handtuchhalter verwenden lässt. Zudem kann die Aufnahme aus Haken bestehen, die um die Halteeinrichtung oder an der Aufnahme angeordnet sind. So befinden sich zum Beispiel Haken bevorzugt an der Unterseite der als Tablett, als Tisch oder als Stange ausgebildeten Aufnahme.

In vorteilhafter Weise kann die Aufnahme über Form- oder Kraftschluss mit der Halteeinrichtung verbunden sein. So können zum Beispiel an der Halteeinrichtung und der Aufnahme ineinander greifende Abschnitte vorgesehen sein. Dabei kann in besonders einfacher Weise die Halteeinrichtung mit der Aufnahme über eine starre Verbindung verbunden sein. Dies ermöglicht eine gute Belastbarkeit der Aufnahme. Es ist auch denkbar, dass die Aufnahme lösbar mit der Halteeinrichtung verbunden ist. Durch diese Maßnahme ist es möglich, dass zuerst die Halteeinrichtung an den Mast angebracht und dann die Aufnahme mit der Halteeinrichtung verbunden wird. Zusätzlich ergibt sich durch diese Maßnahme die Möglichkeit, eine Halteeinrichtung für unterschiedliche Aufnahmen zu verwenden. Zudem ist die Verwendung der Aufnahme ohne die Halteeinrichtung möglich. So kann zum Beispiel eine als Tablett ausgebildete Aufnahme in üblicher Weise zum Transportieren von Gegenständen oder in Verbindung mit der Halteeinrichtung als Ablagefläche an einem Sonnenschirm verwendet werden.

Die Halteeinrichtung und die Aufnahme können in vorteilhafter Weise über eine Gelenkverbindung miteinander verbunden sein. Dies ermöglicht ein Schwenken der Aufnahme. Dieses kann stufenlos oder in Abstufungen erfolgen. So kann zum Beispiel das Element in horizontaler Lage schwenkbar sein. Über eine Gelenkverbindung, die beispielsweise über eine Rasterung arretierbar ist, kann das Element aber auch in Bezug zum Mast um 180° um das Gelenk schwenkbar sein. Durch diese Maßnahme ist die Aufnahme vor dem Zusammenfalten eines Schirms in eine zum Mast parallele Lage schwenkbar, so dass sich ein Entfernen der Vorrichtung vor dem Zusammenfalten des Schirms erübrigt.

In raffinierter Weise kann die Aufnahme ein als Pfanne ausgebildetes Ende aufweisen, welches die Halteeinrichtung umschließt. Hierbei eignet sich insbesondere eine als Ring ausgebildete Halteeinrichtung, da diese nämlich ähnlich einer Kugel von der Pfanne der Aufnahme umschlossen werden kann und so gleichzeitig zur Befestigung des Elements und als Führung für die Aufnahme dient. Auf diese Weise ist es möglich, die Aufnahme auf der Halteeinrichtung um den Mast herum zu schwenken. Dabei kann zur Erhöhung der Belastbarkeit der Aufnahme eine Stütze vorgesehen sein, die sich unterhalb der Aufnahme am Mast abstützt.

Auch kann die Vorrichtung aus zwei trennbaren Hälften bestehen, die über eine Verzahnung um den Mast herum ineinander greifen, wodurch die Klemmwirkung erzielbar ist. Die ineinander zu verzahnenden Kanten der trennbaren Hälften können abwechselnd einen Zapfen und eine Aufnehmung aufweisen, wobei der Zapfen der einen Hälfte in die Ausnehmung der anderen Hälfte greift. Auf diese Weise kann ein Kraftschluss zwischen den beiden Hälften bewirkt werden. Für eine besonders stabile Ausführung der Verzahnung sind Haken an der einen Hälfte der Vorrichtung vorgesehen, die in Haken greifen, die auf der anderen Hälfte der Vorrichtung ausgebildet sind. Dies bewirkt einen besonders stabilen Formschluss zwischen den beiden Hälften, wodurch eine erhöhte Belastbarkeit der Vorrichtung gewährleistet ist.

Die Halteeinrichtung und/oder die Aufnahme kann aus Metall, Holz oder Kunststoff herstellbar sein. Dabei eignet sich Metall zur Herstellung einer sehr stabilen Vorrichtung, die zudem ein besonders hochwertiges Aussehen aufweist. Das Metall kann zudem mit Gravuren oder Ähnlichem versehen werden, wodurch sich zum Beispiel das Dekor der Vorrichtung an ein bestehendes Dekor eines Sonnenschirms oder einer Sitzgruppe anpassen lässt.

Gehört der Sonnenschirm zum Beispiel zu einer Gruppe von Gartenholzmöbeln oder wird die Vorrichtung an einen Holzzaun angebracht, ist die Verwendung von Holz vorteilhaft. Durch diese Maßnahme ist die Vorrichtung bestens in die Möbelgruppe oder einen Holzzaun integrierbar. Zudem zeichnet sich Holz durch eine besonders angenehme Haptik aus.

In vorteilhafter Weise kann die Halteeinrichtung wie auch die Aufnahme aus Kunststoff hergestellt sein. Die Verwendung von Kunststoff ermöglicht die Fertigung einer besonders preisgünstigen, gegen Umwelteinflüsse resistenten Vorrichtung, die in einfacher Weise gereinigt werden kann. Zudem ist die Verwendung von Kunststoff in Bezug auf eine Gewichtsreduzierung von Vorteil. Zudem ist eine Reduzierung des Gewichts zum Beispiel durch die entsprechende Ausbildung der Halteeinrichtung und/oder der Aufnahme als Hohlkörper realisierbar.

Die Halteeinrichtung und/oder die Aufnahme können spritzgusstechnisch hergestellt sein. Die Spritzgusstechnik ist dahingehend vorteilhaft, dass unterschiedliche Formen der Halteeinrichtung und/oder der Aufnahme problemlos realisierbar sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: in einer Seitenansicht, schematisch, Ausführungsbeispiele einer erfindungsgemäßen Vorrichtung,
- Fig. 2: in einer Draufsicht, schematisch, einen Ausschnitt der unteren Vorrichtung aus Fig. 1,
- Fig. 3: in einer Draufsicht, schematisch, in einem Ausschnitt eine mehrteilige Vorrichtung,
- Fig. 4: in einer Seitenansicht, schematisch, in einem Ausschnitt eine weitere Ausführung der erfindungsgemäßen Vorrichtung und
- Fig. 5: in einer Ansicht schräg von unten, eine als Tisch mit Einlegeelement ausgebildete Ausführung der erfindungsgemäßen Vorrichtung.

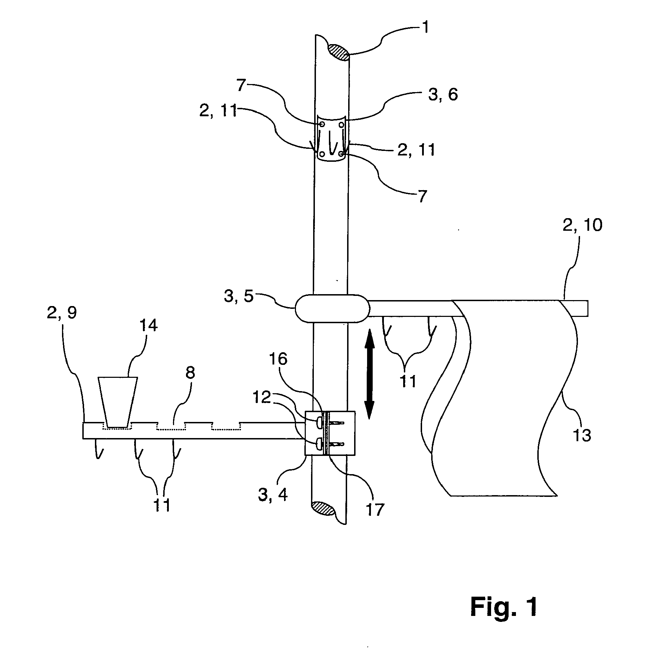

Fig. 1 zeigt in einer schematischen Seitenansicht Ausführungsbeispiele erfindungsgemäßer Vorrichtungen, die höhenverstellbar an einem Mast 1 angebracht sind. Dabei ist jeweils über eine Halteeinrichtung 3 eine Aufnahme 2 mit dem Mast 1 verbunden.

Die Halteeinrichtung 3 der unteren Vorrichtung besteht aus einer öffenbaren Manschette 4, die mittels Schrauben 12, die durch zwei beabstandete Anschläge 16 und17 laufen um den Mast 1 geklemmt ist. Ein mit der öffenbaren Manschette 4 verbundenes Tablett 9 bildet die Aufnahme 2. Das Tablett 9 weist Ausnehmungen 8 in Form von Vertiefungen auf, wobei in einer der Vertiefungen ein Trinkgefäss 14 (Becher) abgestellt ist.

Die mittlere Vorrichtung besteht aus einem geschlossenen Ring 5, der die Halteeinrichtung 5 bildet. Die Aufnahme 2 ist als Stange 10 ausgebildet, über die ein Handtuch 13 geworfen ist.

Die oben am Mast 1 anliegende Vorrichtung besteht aus einem flächigen Element 6, welches die Halteeinrichtung 3 bildet, und ist mittels Befestigungsmitteln 7 am Mast 1 befestigt. An dem flächigen Element 6 sind Haken 11 angeordnet, die die Aufnahme 2 bilden.

An der Unterseite der Stange 10 und des Tabletts 9 sind Haken 11 zum Anhängen von Kleidungsstücken oder Handtüchern angebracht.

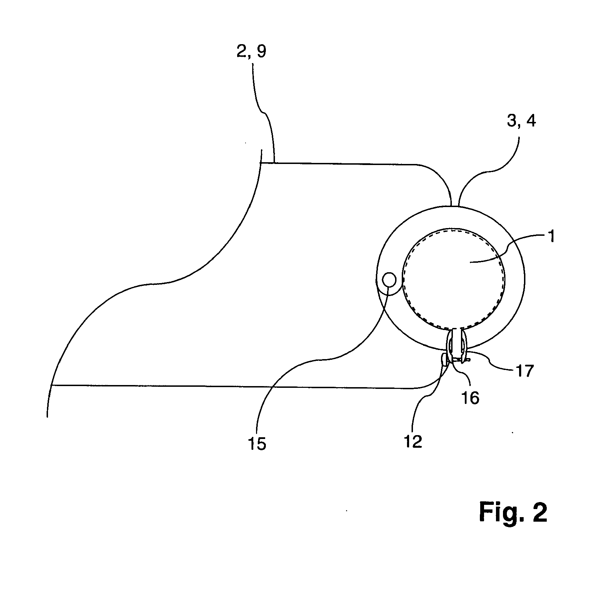

Fig. 2 zeigt in einer schematischen Draufsicht in einem Ausschnitt die untere Vorrichtung aus Fig. 1. Die Vorrichtung weist eine Halteinrichtung 3 auf, die aus einer öffenbaren Manschette 4 besteht, über die die Aufnahme 2 - hier als Tablett 9 ausgebildet - mit dem Mast 1 verbunden ist. Die Manschette 4 besteht aus zwei Teilen, die über eine Achse 15 schwenkbar miteinander verbunden sind. Zudem weist die Manschette 4 Anschläge 16 und 17 auf, wobei der Anschlag 17 ein Innengewinde hat. Durch Drehen der Schraube 12 sind die beiden Anschläge 16 und 17 aufeinander zu bewegbar. Auf diese Weise ist die Manschette 4 im Umfang reduzierbar, wodurch eine Klemmwirkung der Halteeinrichtung 3 am Mast 1 erzielbar ist.

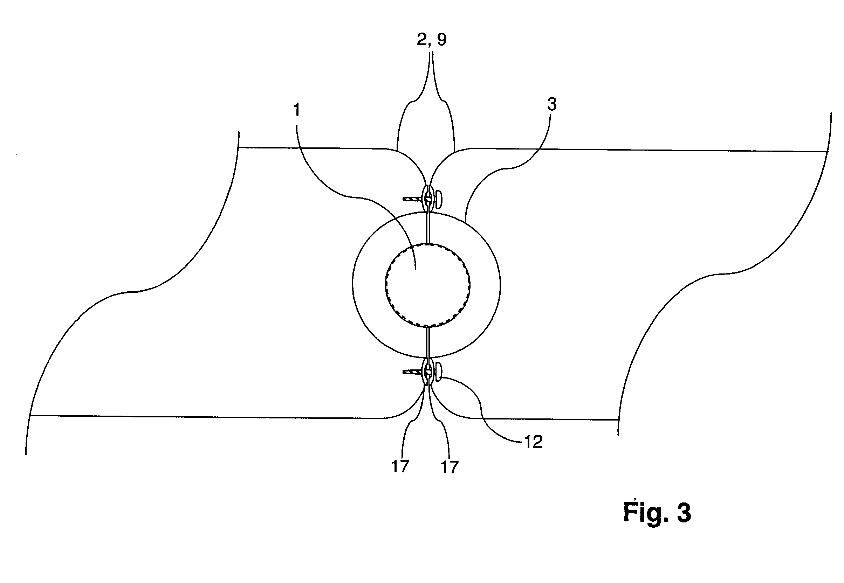

Fig. 3 zeigt in einer schematischen Draufsicht eine erfindungsgemäße Vorrichtung, die aus einer zweiteiligen Aufnahme 2 und einer zweiteiligen Halteeinrichtung 3 besteht. Die beiden Teile der Aufnahme 2 weisen an den aneinander liegenden Kanten Anschläge 17 mit Innengewinde auf. Durch die Schrauben 12 sind die beiden Teile der Aufnahme 2 und die Halteeinrichtung 3 miteinander um den Mast 1 herum verbunden.

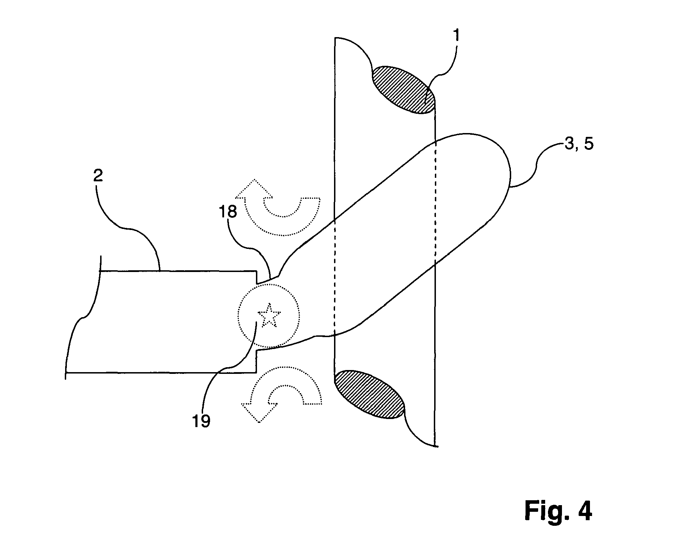

Fig. 4 zeigt in einer schematischen Seitenansicht in einem Ausschnitt die erfindungsgemäße Vorrichtung, wobei die Halteeinrichtung 3 als Ring 5 ausgebildet ist und über eine starre Verbindung 18 in einem Neigungswinkel oder schwenkbar über eine arretierbare Gelenkverbindung 19 (durch die unterbrochene Linie dargestellt) mit der Aufnahme 2 verbunden ist. Die Halteeinrichtung 3 liegt geneigt am Mast 1 an, so dass ein Verrutschen der Vorrichtung gehemmt ist. Die Aufnahme 2 ist über die Gelenkverbindung 19 zum Mast 1 hin schwenkbar.

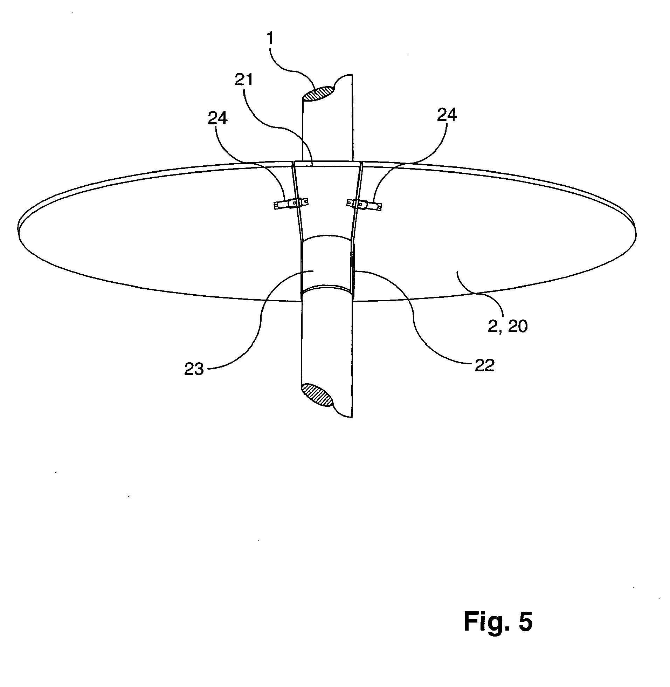

Fig. 5 zeigt in einer Ansicht schräg von unten, eine als Tisch 20 ausgebildete Ausführung der erfindungsgemäßen Vorrichtung, wobei der Tisch 20 eine Aussparung aufweist, über die der Tisch 20 auf den Mast 1 eines Standschirms schiebbar ist. In die Aussparung ist ein der Form der Aussparung angepasstes Einlegeelement 21 eingelegt, welches an der Unterseite über Verbindungselemente 24 mit dem Tisch 20 verbunden ist. Das Einlegeelement 21 und der Tisch 20 bilden an der Unterseite Kragen 22, 23 aus, die zur Stabilisierung der Vorrichtung dienen und umlaufend um den Mast ausgebildet sind.

Hinsichtlich weiterer Details wird zur Vermeidung von Wiederholungen auf die allgemeine Beschreibung verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele eingeschränkt ist.

## Patentansprüche

1. Vorrichtung zum Abstellen, Ablegen und/oder Anhängen von Gegenständen an einem Mast (1), einem Pfahl, einer Stütze, einem Geländer oder dergleichen, insbesondere an dem Mast (1) eines Standschirms, mit einer Aufnahme (2) für die Gegenstände und einer die Aufnahme (2) mit dem Mast (1) verbindenden Halteeinrichtung (3).

2. Vorrichtung nach Anspruch 1, **dadurch gekennzeichnet, dass** die Halteeinrichtung (3) ein- oder mehrteilig ausgebildet ist und ggf. über Form- oder Kraftschluss mit dem Mast (1) verbunden ist, wobei der Kraftschluss zwischen der Halteeinrichtung (3) und dem Mast (1) mittels einer, den Innendurchmesser der Halteeinrichtung (3) verringernden Spannvorrichtung erzielbar ist.

3. Vorrichtung nach Anspruch 1 oder 2, **dadurch gekennzeichnet, dass** die Halteeinrichtung über Befestigungsmittel (7), insbesondere Schraub- und/oder Steckverbindungen, am Mast (1) befestigbar ist, wobei die Halteeinrichtung (3) als Manschette (4) oder als Ring (5) ausgebildet sein kann.

4. Vorrichtung nach einem der Ansprüche 1 bis 3, **dadurch gekennzeichnet, dass** die Halteeinrichtung (3) als flächiges Element (6) vorzugsweise abschnittsweise um den Mast (1) ausgebildet ist.

5. Vorrichtung nach einem der Ansprüche 1 bis 4, **dadurch gekennzeichnet, dass** der Innendurchmesser der Halteeinrichtung (3) veränderbar ist, so dass die Halteeinrichtung (3) an Masten mit unterschiedlichen Durchmessern und ggf. Querschnittsformen anpassbar ist.

6. Vorrichtung nach einem der Ansprüche 1 bis 5, **dadurch gekennzeichnet, dass** die Aufnahme (2) ein- oder mehrteilig ausgebildet und über Formschluss und/oder Kraftschluss mit der Halteeinrichtung (3) verbunden ist, wobei die Aufnahme (2) mindestens eine, vorzugsweise mehrere im Wesentlichen horizontale, vom Mast (1) abragende Flächen umfasst, wobei die mehreren Flächen stufenartig zueinander angeordnet sein können.

7. Vorrichtung nach Anspruch 5 oder 6, **dadurch gekennzeichnet, dass** die Aufnahme (2) um die Halteeinrichtung (3) umlaufend ausgebildet ist und/oder dass die Aufnahme (2) Ausnehmungen (8) aufweist, die zum Abstellen oder Einstecken von Trinkgefässen geeignet sind, wobei die Ausnehmungen (8) als Vertiefungen und/oder Durchgänge ausgebildet sein können und/oder dass die Aufnahme als Tablett (9) oder als Tisch (20) ausgebildet ist, wobei der Tisch (20) eine Aussparung aufweisen kann, die dem Durchmesser des Masts (1) angepasst ist, und über die der Tisch (20) auf den Mast (1) schiebbar ist, wobei ein der Form der Aussparung angepasstes Einlegeelement (21) in die Aussparung einlegbar sein kann und wobei das Einlegeelement (21) über Form und/oder Kraftschluss mit dem Tisch (20) verbindbar sein kann.

8. Vorrichtung nach Anspruch 7, **dadurch gekennzeichnet, dass** in den mit dem Einlegeelement (21) verbindbaren Kanten der Aussparung eine Nut vorgesehen ist, in die das Einlegeelement (21) mit einer entsprechenden Feder greift und/oder dass der Tisch (20) und das Einlegeelement (21) über Verbindungselemente (24) miteinander verbindbar sind und/oder dass zur Stabilisierung unterhalb des Tischs (20) und unterhalb des Einlegeelements (21) Kragen (22, 23) ausgestaltet sind, die am Mast (1) anliegen und zumindest abschnittsweise um den Mast (1) umlaufend ausgebildet sind.

9. Vorrichtung nach einem der Ansprüche 1 bis 5, **dadurch gekennzeichnet, dass** die Aufnahme als Stange (10) ausgebildet ist und/oder dass die Aufnahme (2) Haken (11) zum Anhängen von Gegenständen aufweist.

10. Vorrichtung nach einem der Ansprüche 1 bis 9, **dadurch gekennzeichnet, dass** die Halteeinrichtung (3) und die Aufnahme (2) über eine starre Verbindung (18) lösbar miteinander verbunden sind und/oder dass die Halteeinrichtung (3) und die Aufnahme (2) über eine Gelenkverbindung (19) miteinander verbunden sind, wobei die Aufnahme (2) um den Mast (1) herum schwenkbar mit der Halteeinrichtung (3) verbunden sein kann und/oder wobei die Aufnahme (2) in eine zum Mast (1) parallele Lage schwenkbar sein kann.

11. Vorrichtung nach einem der Ansprüche 1 bis 10, **dadurch gekennzeichnet, dass** die Vorrichtung aus zwei trennbaren Hälften besteht, wobei die miteinander zu verbindenden Kanten der Vorrichtung über eine Verzahnung um den Mast (1) herum ineinander greifen, wodurch die Klemmwirkung am Mast (1) erzielbar ist.

12. Vorrichtung nach einem der Ansprüche 1 bis 11, **dadurch gekennzeichnet, dass** die Halteeinrichtung (3) und/oder die Aufnahme (2) aus Holz, Metall oder Kunststoff besteht und dass die Halteeinrichtung (3) und/oder die Aufnahme (2) im Falle einer Ausführung aus Kunststoff vorzugsweise spritzgusstechnisch gefertigt ist bzw. sind.
